# EUROPEAN PATENT APPLICATION

(11) **EP 4 191 766 A1**
(43) Date of publication of application: **07.06.2023**
(21) Application number: 21849542.2
(22) Date of filing: 09.07.2021
(51) Int. Cl.: H01M 50/209, H01M 50/317, H01M 50/367

(54) **BATTERY CASE, AND BATTERY PACK**

(30) Priority: 31.07.2020 JP 2020130314
(71) Applicant: PANASONIC INTELLECTUAL PROPERTY MANAGEMENT CO., LTD., Chuo-ku Osaka-shi Osaka 540-6207 (JP)
(72) Inventor: SHIMIZU, Keisuke, Osaka-shi, Osaka 540-6207 (JP); ISHIZAKA, Katsushi, Osaka-shi, Osaka 540-6207 (JP)
(74) Representative: Novagraaf International SA
(86) International application number: PCT/JP2021/025881
(87) International publication number: WO 2022/024713

(57) **Abstract**

A battery case includes: an inner case that includes an inner gas discharge hole for discharging the gas generated in batteries accommodated in a battery accommodating chamber to the outside of the battery accommodating chamber; an outer case that has an inner case accommodating chamber accommodating the inner case and includes an outer gas discharge hole for discharging the gas to the outside; a plurality of ribs that extend from the outer surface of the inner case to the inner surface of the outer case, to position the inner case with respect to the outer case, and are arranged at intervals from each other; and one or more gas guide passages defined by an outer surface of the inner case, an inner surface of the outer case, and the plurality of ribs and configured to guide a gas from the inner gas discharge hole to the outer gas discharge hole.

## Description

### TECHNICAL FIELD

The present disclosure relates to a battery case and a battery pack.

### BACKGROUND ART

A conventional battery pack is disclosed in PTL 1. The battery pack has a duct that allows a gas released from the battery to flow when the battery abnormally generates heat. In this battery pack, the temperature of the gas is lowered in the duct, and the low-temperature gas is discharged to the outside, so that the safety of the area around the battery pack at the time of abnormal heat generation of the battery is made perfect.

### Citation List

### Patent Literature

PTL 1: Japanese Patent No. 5378670

### SUMMARY OF THE INVENTION

### Technical problem

Since it is necessary to stretch the duct, the battery pack tends to have a complicated structure and a high manufacturing cost.

Therefore, an object of the present disclosure is to provide a battery case and a battery pack that can not only efficiently cool a gas released from a battery when the battery abnormally generates heat, but also have a simple structure and can suppress manufacturing cost.

### Solution to problem

In order to solve the above problems, a battery case according to the present disclosure includes: an inner case having a battery accommodating chamber that accommodates a plurality of batteries, the inner case including an inner gas discharge part that discharges a gas generated in the batteries accommodated in the battery accommodating chamber to an outside of the battery accommodating chamber; an outer case having an inner case accommodating chamber that accommodates the inner case, the outer case including an outer gas discharge part that discharges the gas to an outside; a plurality of inner case positioning parts disposed from an outer surface of the inner case through an inner surface of the outer case, located in the inner case with respect to the outer case, and disposed at intervals from each other; and one or more gas guide passages defined by an outer surface of the inner case, an inner surface of the outer case, and the plurality of inner case positioning parts and configured to guide a gas from the inner gas discharge part to the outer gas discharge part side.

The inner gas discharge part may be formed of at least one of one or more inner holes and one or more inner relief parts which are damaged when the internal pressure of the battery accommodating chamber becomes equal to or higher than the first predetermined pressure. The outer gas discharge part may be formed of at least one of one or more outer holes and one or more outer relief parts which are damaged when the internal pressure of the inner case accommodating chamber becomes equal to or higher than the second predetermined pressure. When configured in such manner, the first predetermined pressure may be the same as the second predetermined pressure, or may be a pressure different from the second predetermined pressure.

A battery pack according to the present disclosure includes the battery case according to the present disclosure and a plurality of batteries disposed in a battery accommodating chamber of the battery case.

### Advantageous effect of invention

According to the present disclosure, it is possible to realize a battery case and a battery pack that can not only efficiently cool a gas released from a battery when the battery abnormally generates heat, but also have a simple structure and can suppress manufacturing cost.

### BRIEF DESCRIPTION OF THE DRAWINGS

Fig. 1 is a perspective view of a battery pack according to a first exemplary embodiment of the present disclosure.
Fig. 2 is a cross-sectional view taken along line A-A in Fig. 1.
Fig. 3 is a cross-sectional view taken along line B-B in Fig. 1.
Fig. 4 is a plan view of an inner case of the battery pack as viewed from one side in a height direction (thickness direction) indicated by an arrow D in Fig. 3.
Fig. 5 is a cross-sectional view of a battery pack according to a modified example of the first exemplary embodiment, which corresponds to Fig. 2.
Fig. 6 is a plan view of an inner case included in a battery pack of a second exemplary embodiment, which corresponds to Fig. 4.
Fig. 7 is a plan view of an inner case included in a battery pack of a third exemplary embodiment, which corresponds to Fig. 4.
Fig. 8 is a cross-sectional view corresponding to Fig. 2 in a battery pack of a fourth exemplary embodiment.

### DESCRIPTION OF EMBODIMENT

Hereinafter, an exemplary embodiment according to the present disclosure is described in detail with reference to the accompanying drawings. Note that, in a case where a plurality of exemplary embodiments and modified examples are included in the following, it is assumed from the beginning to construct a new exemplary embodiment by appropriately combining feature parts of these. In addition, a plurality of drawings include schematic views, and dimensional ratios such as a length, a width, and a height of each member do not necessarily coincide among different drawings. Those configuration elements described in the following that are not recited in independent Claims representing the highest concept are shown herein as optional configuration elements and are not essential. Further, in the present specification, the term "substantially" is used in the same meaning as the term "approximately", and the requirement "substantially..." is satisfied as long as it is substantially the same.

In the following exemplary embodiments and modified examples, the case where battery pack 1, 101, 401 has a substantially rectangular-parallelepiped shape will be described as an example. In the drawings and the description of the examples, the X direction indicates the longitudinal direction of battery pack 1, 101, 401 (outer case 2, 102, 402), the Y direction indicates the width direction (lateral direction) of battery pack 1 (outer case 2, 102, 402), and the Z direction indicates the height direction (thickness direction) of battery pack 1, 101, 401 (outer case 2, 102, 402). The X, Y, and Z directions are orthogonal to one another. In the following example, the same configurations are given the same reference numerals in the drawings, and redundant descriptions are omitted. In the modified example of the first exemplary embodiment and the second exemplary embodiment and the subsequent embodiments, the description of the same operation and effect as those of the first exemplary embodiment and the modified example will be omitted.

### (First exemplary embodiment)

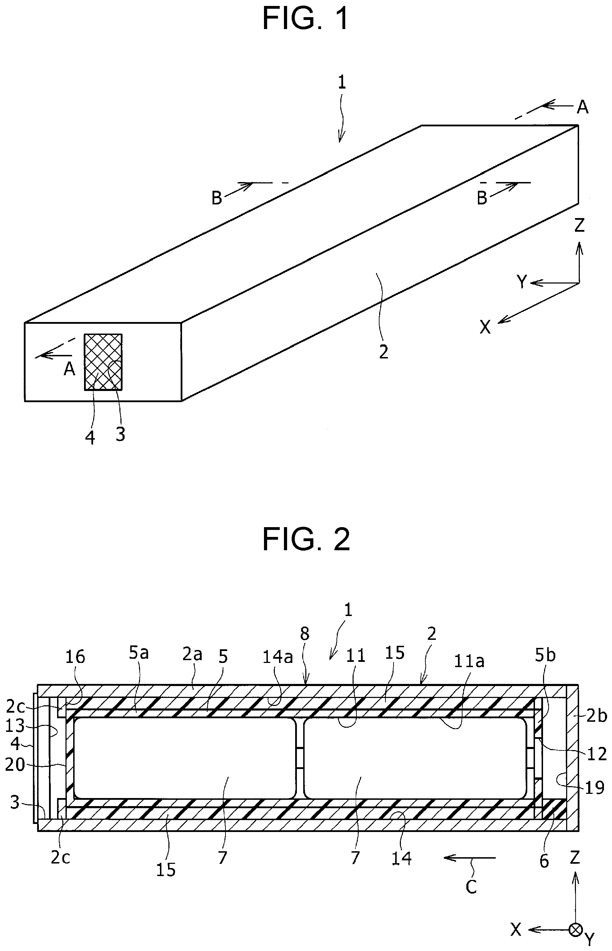

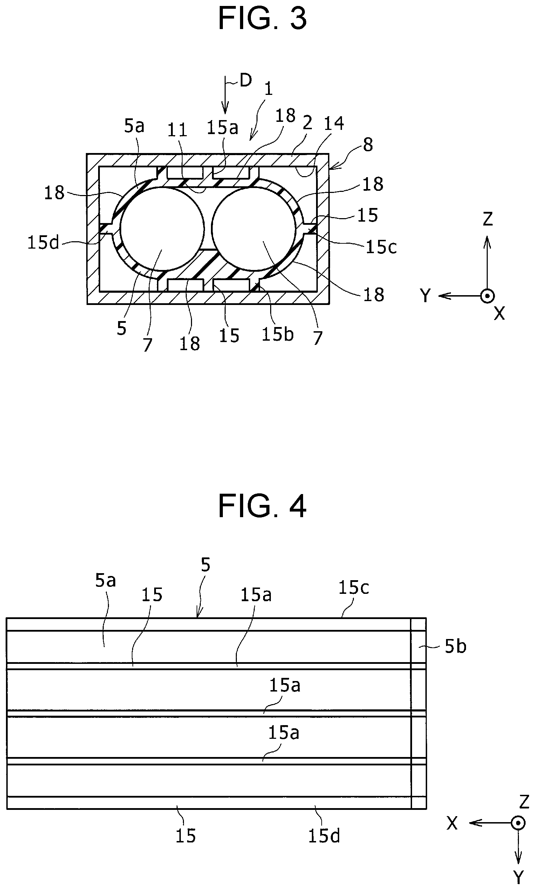

Fig. 1 is a perspective view of battery pack 1 according to a first exemplary embodiment of the present disclosure. Fig. 2 is a cross-sectional view taken along line A-A in Fig. 1 (Fig. 1 is a cross-sectional view of battery pack 1 taken along an XZ plane passing through the center in the Y direction). Fig. 3 is a cross-sectional view taken along line B-B in Fig. 1 (a cross-sectional view of a portion of battery pack 1, which is neither the center nor the end in the X direction, taken along a YZ plane). As illustrated in Fig. 1, battery pack 1 includes outer case 2 having a substantially rectangular-parallelepiped shape. Outer case 2 is made of, for example, a metal material or a resin material. Outer case 2 has one outer gas discharge hole 3 as an example of an outer gas discharge part at one end in the X direction. Battery pack 1 further includes a meshed discharge hole covering member 4 made of metal, resin, or the like. Discharge hole covering member 4 is fixed to outer case 2 so as to close outer gas discharge hole 3 by a fixing means, for example, an adhesive or a welding part. Discharge hole covering member 4 may not have a mesh shape, or may be made of an air-permeable and waterproof material that passes exhaust gas and shields liquid such as water from the outside, for example, Gore-Tex (registered trademark).

As illustrated in Fig. 2, battery pack 1 further includes inner case 5, block-shaped positioning member 6 made of an elastic material such as rubber, and a plurality of cylindrical secondary batteries (hereinafter, simply referred to as a battery) 7 as an example of the plurality of batteries. Battery pack 1 includes battery case 8 and the plurality of batteries 7, and battery case 8 includes inner case 5, outer case 2, discharge hole covering member 4, and positioning member 6.

Note that battery 7 of the present embodiment is configured by a representative secondary battery, for example, a lithium ion battery, a lithium secondary battery, a nickelcadmium battery, a nickel hydride battery, or the like, but the battery included in the battery pack of the present disclosure may be configured by a primary battery, for example, a manganese battery or an alkaline battery. The battery included in the battery pack of the present disclosure is not limited to the primary battery and the secondary battery, and may not be a cylindrical battery, and may be, for example, a prismatic battery, a pouch type battery, or the like.

Inner case 5 has battery accommodating chamber 11 that houses the plurality of batteries 7. Inner case 5 includes inner case body 5a and flat lid 5b. Inner case body 5a has first recess 11a for accommodating the plurality of batteries 7 the axes thereof aligned, and has an opening only on the other side in the X direction (one side in the axis of battery 7). After the plurality of batteries 7 are accommodated in first recess 1 1a of inner case body 5a, lid 5b is fixed to the end on the other side in the X direction of inner case body 5a with a fixing means, for example, a fastening member such as a screw (not illustrated) so as to close the opening on the other side in the X direction of inner case body 5a. Lid 5b may be formed integrally with inner case body 5a. In this case, inner case body 5a is divided into a plurality of members, and inner case body 5a is assembled after the plurality of batteries 7 are housed.

battery accommodating chamber 11 is thereby defined by inner case body 5a and lid 5b. Inner case body 5a may have a battery holder, and battery 7 may be accommodated in the battery holder. Alternatively, battery 7 may be fixed to the inner surface of first recess 1 1a of inner case body 5a with a double-sided tape or an adhesive. Lid 5b has one inner gas discharge hole 12 as an example of the inner gas discharge part. Inner gas discharge hole 12 extends in the X direction (along axis of battery 7) and penetrates lid 5b. Inner gas discharge hole 12 is provided to discharge a gas generated when battery 7 fixed to battery accommodating chamber 11 abnormally generates heat to the outside of battery accommodating chamber 11.

Inner case 5 is accommodated in inner case accommodating chamber 14 provided in outer case 2. Specifically, outer case 2 includes outer case body 2a and flat lid 2b, and outer case body 2a includes second recess 14a that accommodates inner case 5 and has an opening only on one side in the X direction (the other side in the axis of battery 7). Outer case body 2a has a plurality of inner case locking pieces 2c protruding inside inner case accommodating chamber 14 in a direction (Z direction) orthogonal to the X direction on one side in the X direction of outer case body 2a. The plurality of inner case locking pieces 2c are positioned at intervals in the X direction with respect to inner surface 13 on one side in the X direction of outer case body 2a. The plurality of inner case locking pieces 2c have a flat plate shape, and the plurality of inner case locking pieces 2c are positioned at intervals from each other. End surfaces 16 on the other side in the X direction of the plurality of inner case locking pieces 2c are positioned on substantially the same plane on the YZ plane formed by the Y direction and the Z direction.

Inner case 5 in which lid 5b is fixed to inner case body 5a in a state where the plurality of batteries 7 are accommodated is relatively moved to one side in the X direction indicated by an arrow C in Fig. 2 with respect to outer case body 2a, and inner case 5 is accommodated in second recess 14a of outer case body 2a until an end surface on one side in the X direction abuts on the inner case locking piece 2c. Thereafter, the block-shaped positioning member 6 is pushed into second recess 14a until it abuts on the end surface on the other side in the X direction of inner case 5, and then lid 2b is fixed to outer case body 2a using a fixing means, for example, a fastening member (not illustrated) such as a screw so as to close the opening of second recess 14a. When lid 2b is fixed to outer case body 2a, positioning member 6 is pushed into one side in the X direction, so that the relative position of inner case 5 in the X direction with respect to outer case 2 can be accurately positioned.

As illustrated in Fig. 3, inner case 5 includes a plurality of ribs 15 arranged at intervals that extend from an outer surface thereof to an inner surface of outer case 2, position inner case 5 with respect to outer case 2. The plurality of ribs 15 include one or more first ribs 15a that extend in the height direction (Z direction) of battery pack 1 and are in contact with the inner surface of outer case 2 on one side in the Z direction, and one or more second ribs 15b that extend in the Z direction and are in contact with the inner surface of outer case 2 on the other side in the Z direction. The plurality of ribs 15 include one or more third ribs 15c extending in the Y direction and in contact with the inner surface of outer case 2 on one side in the Y direction, and one or more fourth ribs 15d extending in the Y direction and in contact with the inner surface of outer case 2 on the other side in the Y direction. As a result, the relative position of inner case 5 in the Y direction and the Z direction with respect to outer case 2 can be accurately positioned, and as a result, inner case 5 can be accurately positioned with respect to outer case 2. Each rib 15 constitutes an inner case positioning part.

Although not described in detail, inner case 5 is formed of, for example, an insulating member such as resin, and one or more metal parts partially having conductivity are fixed to inner case 5. The plurality of batteries 7 are electrically connected by at least one of series connection and parallel connection in a state of being fixed at a predetermined position of inner case 5 by the one or more metal components. Here, when the series connection exists, the output of battery pack 1 can be increased, and when the parallel connection exists, the capacity of battery pack 1 can be increased.

Fig. 4 is a plan view of inner case 5 as viewed from one side in the Z direction indicated by arrow D in Fig. 3. As illustrated in Fig. 4, each rib 15 extends in the X direction from one end part to the other end part of inner case 5 in the X direction. As illustrated in Fig. 3, gas guide passage 18 defined by two ribs 15, the outer surface of inner case 5, and the inner surface of outer case 2 and extending in the X direction exists circumferentially between two ribs 15 and 15 adjacent to each other in the circumferential direction of the outer peripheral surface of inner case 5.

Referring to Fig. 2 again, each inner case locking piece 2c closes only a part of the opening on one side in the X direction of gas guide passage 18 (see Fig. 3), and positioning member 6 closes only a part of the opening on the other side in the X direction of gas guide passage 18. Therefore, battery accommodating chamber 11, space 19 is between lid 5b of inner case 5 and lid 2b of outer case 2 in the X direction, each gas guide passage 18, space 20 generated between the end surface on one side in the X direction of inner case 5 and the inner surface on one side in the X direction of outer case 2 in the X direction, and the outer space of battery pack 1 communicate with each other due to the presence of inner gas discharge hole 12 and outer gas discharge hole 3.

In the above configuration, when at least one battery 7 abnormally generates heat and jets a high-temperature gas or the like to the outside, the high-temperature gas flows as follows. That is, the high-temperature gas passes through inner gas discharge hole 12 on the other side in the X direction of inner case 5, which is the only place communicating with the outside of inner case 5, and reaches space 19. Thereafter, the high-temperature gas flows to one side in the X direction through any one of the gas guide passages 18, and reaches space 20. The temperature of the gas gradually decreases as the gas flows through gas guide passage 18 toward one side in the X direction. The gas that has reached space 20 passes through outer gas discharge hole 3 and the mesh-shaped discharge hole covering member 4. The gas is more efficiently cooled by coming into contact with discharge hole covering member 4. The gas is discharged to the outside of battery pack 1 after passing through outer gas discharge hole 3 and the mesh-shaped discharge hole covering member 4.

As described above, battery case 8 includes: inner case 5 that has battery accommodating chamber 11 accommodating the plurality of batteries 7 and includes inner gas discharge hole (inner gas discharge part) 12 for discharging the gas generated in batteries 7 accommodated (for example, fixing) in battery accommodating chamber 11 to the outside of battery accommodating chamber 11; outer case 2 that has inner case accommodating chamber 14 accommodating inner case 5 and includes outer gas discharge hole (outer gas discharge part) 3 for discharging the gas to the outside; the plurality of ribs (inner case positioning parts) 15 that extend from the outer surface of inner case 5 to the inner surface of outer case 2, position inner case 5 with respect to outer case 2, and are arranged at intervals from each other; and the outer surface of inner case 5, the inner surface of outer case 2, and the plurality of ribs 15, one or more gas guide passages 18 that guide the gas from inner gas discharge hole 12 side toward outer gas discharge hole 3.

According to the present disclosure, a gas discharge path having a long path length can be formed by effectively using a space between inner case 5 and outer case 2. Therefore, the temperature of the gas ejected from battery 7 can be efficiently lowered, and the safety at the time of abnormal heat generation of battery 7 can be improved. Further, according to the present disclosure, gas guide passage 18 can be configured with a very simple structure only by providing the inner case positioning part that positions inner case 5 with respect to outer case 2 without any need to stretch a complicated pipe. Therefore, when battery 7 abnormally generates heat, gas released from the battery can be cooled at low cost by a simple structure.

Further, the plurality of inner case positioning parts may include the plurality of ribs 15.

According to this configuration, the desired gas guide passage 18 can be easily and inexpensively formed by adjusting the formation positions of the adjacent ribs 15. In addition, gas guide passage 18 having a long path length and a high gas cooling effect can be formed.

Battery accommodating chamber 11 may accommodate a plurality of cylindrical batteries 7. Outer case 2 may have outer gas discharge hole 3 only at one end in the height direction (match axial direction and x direction) of the cylindrical battery 7 accommodated and fixed in battery accommodating chamber 11, and inner case 5 may have inner gas discharge hole 12 only at the other end in the X direction.

According to this configuration, the length of gas guide passage 18 in the X direction can be increased, and the gas cooling effect can be improved. In the first exemplary embodiment, outer gas discharge hole (outer gas discharge part) 3 is formed in the end surface on one side in the axis, but the outer gas discharge part may be formed in an outer peripheral surface portion on one side in the axis of the outer case. Although inner gas discharge hole (inner gas discharge part) 12 is formed in the end surface on the other side in the axial direction, the inner gas discharge part may be formed in an outer peripheral surface portion on the other side in the axis in the inner case.

Further, inner case 5 and the plurality of ribs (inner case positioning parts) 15 may be integrally formed of an insulating material having an insulating property.

According to this configuration, assemblability of battery pack 1 can be improved.

Battery case 8 may include mesh-shaped discharge hole covering member 4 that covers outer gas discharge hole 3. The discharge hole covering member 4 is preferably made of a metal mesh or a porous metal. Alternatively, when battery 7 abnormally generates heat, the battery case may be made of an air-permeable and waterproof material that allows the gas ejected from battery 7 to pass therethrough and prevents external water from entering the outer case, and may include an air-permeable and waterproof member that covers the outer gas discharge part. In this case, the air-permeable and waterproof member is burned out by the gas ejected from the battery, and the gas is discharged from the outer gas discharge part to the outside of the battery pack.

According to this configuration, the gas can also be cooled by discharge hole covering member 4, and the safety can be enhanced.

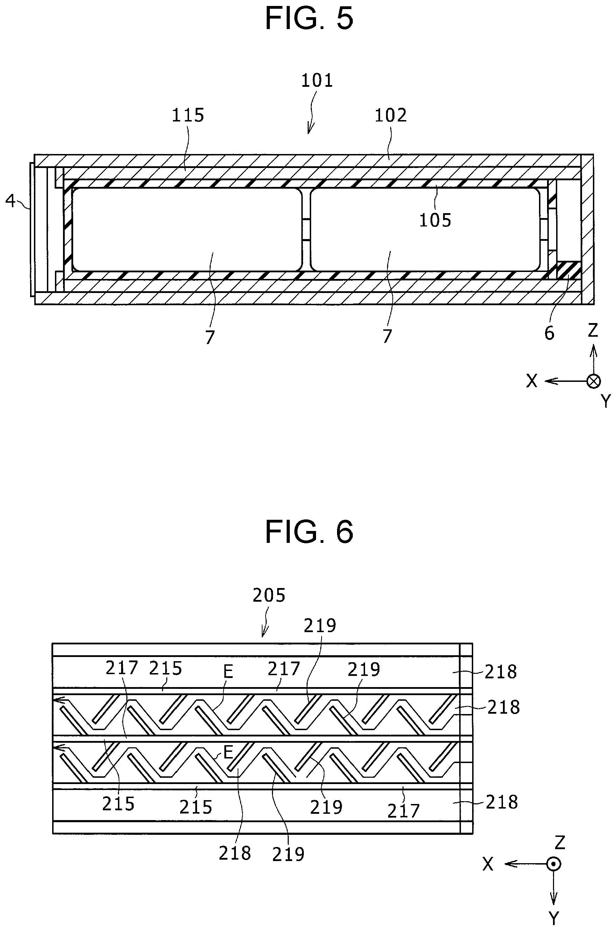

In the first exemplary embodiment, the case where inner case 5 and the plurality of inner case positioning parts (for example, ribs 15) are integrally molded has been described. However, as illustrated in Fig. 5, that is, a cross-sectional view corresponding to Fig. 2 in battery pack 101 of the modified example, the inner case positioning part (for example, rib 115) may not be molded integrally with inner case 105, but may be molded integrally with outer case 102. Alternatively, the inner case positioning part may be formed of an annular separate member different from the inner case and different from the outer case, or the inner case positioning part formed of an annular member may be inserted between the outer peripheral surface of the inner case and the inner peripheral surface of the outer case. In this case, it is preferable that the inner case positioning part is made of an elastic body, for example, a rubber material or a metal material having elasticity, because favorable assemblability can be achieved.

As illustrated in Figs. 2 and 3, in the first exemplary embodiment, the plurality of batteries 7 are arranged in two rows and two columns in inner case 5, but in the battery pack of the present disclosure, the plurality of batteries may be arranged in N rows and M columns (here, N and M are both natural numbers, and at least one of N and M is an integer of 2 or more). In the first exemplary embodiment, outer gas discharge hole 3 is covered with mesh-shaped discharge hole covering member 4, but the outer gas discharge hole may not be covered with the mesh-shaped discharge hole covering member.

In the first exemplary embodiment, the outer gas discharge part is constituted by one outer gas discharge hole 3, and the inner gas discharge part is constituted by one inner gas discharge hole 12. However, the outer gas discharge part may be constituted by two or more outer gas discharge holes, and the inner gas discharge part may also be constituted by two or more inner gas discharge holes. Alternatively, conventionally, for safety, the secondary battery has a structure in which the secondary battery is broken when the internal pressure becomes equal to or higher than a predetermined pressure, and the generated gas or the like is discharged to the outside. However, similarly, at least one of the inner gas discharge part and the outer gas discharge part may also have a structure itself which is broken when the internal pressure becomes equal to or higher than a predetermined pressure, and such a structure may be, for example, a portion having low strength (rigidity) as compared with other portions.

### (Second exemplary embodiment)

Fig. 6 is a plan view of inner case 205 included in the battery pack of the second exemplary embodiment, which corresponds to Fig. 4. In the second exemplary embodiment, in comparison with the first exemplary embodiment, only the shape (structure) of rib 215 of inner case 205 is different, and all other configurations of the second exemplary embodiment are the same as those of the first exemplary embodiment. As illustrated in Fig. 6, in inner case 205, gas guide passage 218 is positioned between two ribs 215 adjacent to each other at an interval. When a direction from inner gas discharge hole 12 side (see Fig. 2) toward outer gas discharge hole 3 (see Fig. 2) is a gas flow direction, at least one rib 215 has one ridge part 217 and a plurality of protrusions 219 protruding from ridge part 217 so as to be separated from ridge part 217 toward the downstream of the gas flow and arranged at intervals from each other.

According to the second exemplary embodiment, the gas can flow on the zigzag path indicated by arrow E in Fig. 6, and the path length until the gas is discharged to the outside can be increased. Therefore, the gas cooling effect can be further improved.

Protrusion 219 protrudes from ridge part 217 so as to be away from ridge part 217 toward the downstream of the gas flow. In other words, protrusion 219 protrudes from ridge part 217 toward the downstream side of the gas flow from the root on ridge part 217 toward the tip. Therefore, protrusion 219 does not obstruct the flow of the gas to the downstream, and the gas can be smoothly flowed to the downstream.

### (Third exemplary embodiment)

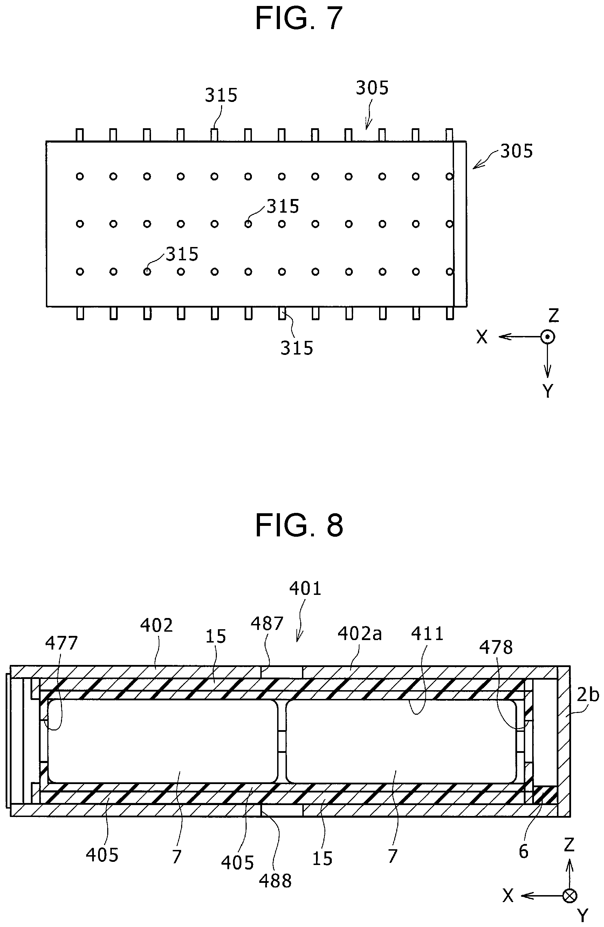

Fig. 7 is a plan view of inner case 305 included in the battery pack of the third exemplary embodiment, which corresponds to Fig. 4. In the third exemplary embodiment, in comparison with the first exemplary embodiment, only the shape (structure) of the inner case positioning part of inner case 305 is different, and all other configurations of the third exemplary embodiment are the same as those of the first exemplary embodiment. As illustrated in Fig. 7, in the third exemplary embodiment, the plurality of inner case positioning parts includes a plurality of columnar protruding parts 315 arranged at intervals from each other. The protruding part 315 may have, for example, a boss shape (cylindrical shape) or a prismatic shape.

According to the third exemplary embodiment, the gas can be stirred by the plurality of columnar protruding parts 315, and a turbulent flow can be generated. Therefore, the gas can be cooled more effectively.

### (Fourth exemplary embodiment)

Fig. 8 is a cross-sectional view of battery pack 401 according to the fourth exemplary embodiment, which corresponds to Fig. 2. Battery pack 401 differs from battery pack 1 only in two configurations described below. Specifically, battery pack 401 is different from battery pack 1 in that inner case 405 has inner gas discharge holes 477, 478 as an example of an inner gas discharge part at one end and the other end in the height direction (matching the X direction) of the cylindrical battery 7 fixed to battery accommodating chamber 411. Battery pack 401 is different from battery pack 1 in that outer case 402 has an outer gas discharge holes 487, 488 as an example of an outer gas discharge part in a central part located at a position other than both ends in the X direction.

Outer gas discharge hole 487 is provided at one end in the Z direction of outer case 402 and communicates with all the gas guide passages (not shown) located on one side in the Z direction. Outer gas discharge hole 488 is provided at the other end in the Z direction of outer case 402, and communicates with all the gas guide passages (not shown) located on the other side in the Z direction.

Depending on the specifications of the battery pack, a large number of batteries may be connected in series, and the dimension in the height direction of cylindrical battery 7 in the battery pack may be long. In such a case, even if the configuration of the fourth exemplary embodiment is adopted, a gas guide passage having a sufficient path length for cooling the gas can be formed.

In a case where the configuration of the fourth exemplary embodiment is adopted, when the inner case positioning part is formed of a rib and the plurality of protrusions 219 described with reference to Fig. 6 is formed on the rib, the gas flow direction is opposite to the X direction between the gas guide passage located on one side in the X direction and the gas guide passage located on the other side in the X direction. Therefore, the plurality of protrusions are formed such that the inclination direction (inclination direction) of the protrusions differs between one side in the X direction and the other side in the X direction with the outer gas discharge holes 487, 488 forming position in the X direction as a boundary.

### (Other modified examples)

Note that the present disclosure is not limited to the above-described exemplary embodiment and the modified examples thereof, and various improvements and changes are possible within the matters described in the Claims of the present application and the equivalent scope thereof.

For example, the inner case positioning part may include both the plurality of ribs 15 described with reference to Figs. 3 and 4 and the plurality of protruding parts 315 described with reference to Fig. 7.

The case where outer case 2 has a rectangular-parallelepiped shape has been described. However, the outer case of the present disclosure may not have a rectangular-parallelepiped shape, and may have any shape as long as it can have the inner case accommodating chamber and the outer gas discharge part. The inner case of the present disclosure may also have any shape as long as the inner case can have the battery accommodating chamber and the inner gas discharge part.

The case where battery pack 1, 101, 401 has an appearance of a substantially rectangular-parallelepiped shape, and gas guide passage 18 extends in the X direction (longitudinal direction) or extends on a zigzag path in the X direction has been described. However, the gas guide passage may extend in the width direction of the battery pack or may extend on a zigzag path in the width direction. Alternatively, the gas guide passage may include a portion extending along the longitudinal direction of the battery pack and a portion extending along the width direction. Alternatively, the gas guide passage may include a portion extending in a direction inclined at an acute angle in the longitudinal direction of the battery pack, and for example, the gas guide passage may extend along a diagonal line of the battery pack in the XY plane. The battery case of the present disclosure may have a spiral rib. When such a spiral rib is provided, the path length of the gas guide passage can be significantly increased even in a compact battery case, and gas cooling performance can be improved.

### REFERENCE MARKS IN THE DRAWINGS

1, 101, 401 battery pack
2, 102, 402 outer case
3, 487, 488 outer gas discharge hole
4 discharge hole covering member
5, 105, 205, 305, 405 inner case
7 battery
8 battery case
11, 411 battery accommodating chamber
12, 477, 478 inner gas discharge hole
14 inner case accommodating chamber
15, 15a, 15b, 15c, 15d, 115,215 rib
18, 218 gas guide passage
217 ridge part
219 protrusion
315 protruding part

## Claims

1. A battery case comprising:
an inner case including
a battery accommodating chamber that accommodates a plurality of batteries, and
an inner gas discharge part through which a gas generated in the plurality of batteries is discharged to an outside of the battery accommodating chamber;
an outer case including
an inner case accommodating chamber that accommodates the inner case, and
an outer gas discharge part through which the gas is discharged to an outside;
a plurality of inner case positioning parts disposed from an outer surface of the inner case through an inner surface of the outer case, to position the inner case with respect to the outer case, and disposed at intervals from each other; and
one or more gas guide passages defined by an outer surface of the inner case, an inner surface of the outer case, and the plurality of inner case positioning parts and configured to guide a gas from the inner gas discharge part to the outer gas discharge part.

2. The battery case according to Claim 1, wherein the plurality of inner case positioning parts include a plurality of ribs.

3. The battery case according to Claim 2, the battery case further comprising one ridge part and a plurality of protrusions wherein
each of one or more gas guide passages is located between a corresponding pair of the plurality of ribs adjacent to each other at a distance, and
when a direction from the inner gas discharge part toward the outer gas discharge part is a gas flow direction, at least one of the plurality of ribs includes the one ridge part and the plurality of protrusions protruding from the one ridge part to be away from the one ridge part as going toward the outer gas discharge part in the gas flow direction and located at intervals from each other.

4. The battery case according to any one of Claims 1 to 3, wherein each of the plurality of inner case positioning parts includes a plurality of columnar protruding parts disposed at intervals from each other.

5. The battery case according to any one of Claims 1 to 4, wherein
the battery accommodating chamber accommodates a plurality of cylindrical batteries, and
the outer case includes the outer gas discharge part only at one end in a height direction of each of the plurality of cylindrical batteries accommodated in the battery accommodating chamber, and the inner case includes the inner gas discharge part only at another end in the height direction.

6. The battery case according to any one of Claims 1 to 4, wherein
the battery accommodating chamber accommodates a plurality of cylindrical batteries, and
the inner case includes the inner gas discharge part at one end and another end in a height direction of each of the plurality of cylindrical batteries accommodated in the battery accommodating chamber, and the outer case includes the outer gas discharge part at a central part located other than both ends in the height direction.

7. The battery case according to any one of Claims 1 to 6, wherein the inner case and the plurality of inner case positioning parts are integrated with an insulating material including an insulating property.

8. The battery case according to Claim 1 any one of Claims 1 to 7, comprising: a meshed member covering the outer gas discharge part or an air-permeable and waterproof member that allows the gas to pass therethrough, includes an air-permeable and waterproof material configured to prevent external water from entering the outer case, and covers the outer gas discharge part.

9. A battery pack comprising:
the battery case according to any one of Claims 1 to 8; and
the plurality of batteries arranged in the battery accommodating chamber of the battery case.
